# Europäisches Patentamt

# European Patent Office

# Office européen des brevets

(11) Numéro de publication: **0 097 093**

**B1**

(12) # FASCICULE DE BREVET EUROPÉEN

(45) Date de publication du fascicule du brevet:
03.09.86

(21) Numéro de dépôt: **83401161.1**

(22) Date de dépôt: **07.06.83**

(51) Int..Cl.⁴: **A 01 N 25/04**

(54) **Procédé de fabrication d'un produit pour la destruction d'animaux nuisibles.**

(30) Priorité: **14.06.82 FR 8210326**

(43) Date de publication de la demande:
**28.12.83 Bulletin 83/52**

(45) Mention de la délivrance du brevet:
**03.09.86 Bulletin 86/36**

(84) Etats contractants désignés:
**AT BE CH DE GB IT LI NL**

(56) Documents cité:
**BE-A-549 318**
**CH-A-348 003**
**FR-A-1 498 299**
**FR-A-1 575 437**
**GB-A-1 236 885**

**Le dossier contient des informations techniques présentées postérieurement au dépôt de la demande et ne figurant pas dans le présent fascicule.**

(73) Titulaire: **Pesche, Bernard, 4 Boulevard Diderot, F-75012 Paris (FR)**

(72) Inventeur: **Pesche, Bernard, 4 Boulevard Diderot, F-75012 Paris (FR)**

(74) Mandataire: **Bressand, Georges, c/o CABINET LAVOIX 2 Place d'Estienne d'Orves, F-75441 Paris Cedex 09 (FR)**

## Description

La présente invention est relative à un procédé de fabrication d'un produit ou appât pour la destruction d'animaux nuisibles tels que taupes, rats musqués et ragondins, rats et petits rongeurs, mollusques nuisibles, etc...

Faute de disposer d'un procédé approprié pour les fabriquer, on s'est attaché dans la technique antérieure aux critères de composition, de goût et d'odeur pour les appâts mais on a négligé la forme, la consistance, le volume et la tenue à l'humidité de ces appâts qui jouent cependant un rôle très important sur le plan de l'attractivité et de l'efficacité du produit.

Ainsi le brevet FR-A-1 575 437 décrit des compositions d'appâts notamment pour limaces, et leur procédé de fabrication par gélification de la composition (pâte), effectuée avant l'extrusion de la pâte et chauffage, c'est-à-dire avant mise en forme.

Le brevet FR-A-1 498 299 décrit une composition taupicide, non gélifiée, qui est sous forme d'un mélange pâteux conditionné dans des tubes.

Dans le brevet BE-A-549 318, un produit raticide est obtenu à l'aide d'un agent de fixation de l'aliment permettant d'agglomérer l'aliment et le poison.

Cependant aucun de ces brevets ne fournit des moyens pour obtenir des produits semblables à la nourriture naturelle des animaux.

L'invention a pour but de remédier aux inconvénients ci-dessus et de fournir un procédé de fabrication d'un produit qui, à partir de produits alimentaires naturels, permet de reconstituer des aliments complets parfaitement homogènes, c'est-à-dire contenant dans leur masse, non seulement les éléments nutritifs habituels de l'animal considéré, tels que glucides, protides, lipides, sels minéraux, etc..., mais encore des produits de conservation, des parfums, des éléments attractifs, des colorants et les toxiques appropriés à la destruction des animaux. Le procédé permet en outre de donner aux produits obtenus une consistance, un volume, une forme et un pourcentage d'humidité aussi semblables que possible à ceux de la nourriture habituelle de chacun des animaux auxquels on les destine.

L'invention a ainsi pour objet un procédé de fabrication de produits mis en forme et prêts à l'utilisation pour la destruction d'animaux nuisibles à partir d'une pâte aqueuse fluide contenant des élémets nutritifs, au moins un produit toxique vis-à-vis de l'animal à détruire, et un composant gélifiable, caractérisé en ce qu'on met la pâte sous la forme désirée pour le produit final, on gélifie ensuite la pâte ainsi mise en forme par mise en contact du produit mis en forme avec une solution aqueuse d'un sel métallique susceptible d'un échange d'ions avec le composant gélifiable et on conserve le produit gélifié pris en masse ainsi obtenu en milieu salin aqueux légèrement acide, ou sous vide ou sous gaz inerte.

D'autres caractéristiques et avantages de l'invention apparaitront à la lecture de la description qui va suivre.

Le procédé de l'invention comprend essentiellement les stades successifs suivants:

a) la préparation d'une pâte aqueuse fluide contenant des éléments nutritifs, au moins un produit toxique vis-à-vis de l'animal à détruire et un composant gélifiable;

b) la mise le la pâte sous la forme désirée pour le produit final;

c) la gélification ou prise en masse de la pâte mise en forme, et

d) la conservation du produit gélifié.

La préparation de la pâte aqueuse comprend essentiellement au moins un des stades suivants:

1°) la mise en solution des produits solubles dans l'eau et, en particulier, les produits de conservation tels que du benzoate de sodium, des dérivés phénolés ou esters de l'acide benzoïque, du formol, etc... On peut aussi ajouter un agent acidifiant tel que l'acide citrique ou l'acide ascorbique.

2°) La mise en suspension dans la solution aqueuse d'éléments nutritifs hachés, broyés ou pulvérulents. Il s'agit en pratique essentiellement de glucides et de protides.

Les glucides comprennent, par exemple, des farines de céréales, de gluten, de la pulpe de racines, des tubercules, des fruits, etc..., notamment des carottes, des betteraves, des pommes de terre, etc...

Les protides seront fournis, par exemple, par des farines d'origine animale (viande, poisson, sang, etc...) ou par de la chair hachée (poisson, viande, foie, abats, etc...)

On établira entre l'eau et les éléments précités des proportions relatives telles que le mélange obtenu soit encore très liquide.

3°) La dispersion des liants et agents gélifiables.

Sous agitation, on introduit dans le produit résultant des stades a) et/ou b) un composant gélifiable et éventuellement un liant. Le composant gélifiable est de préférence un alginate de métal alcalin tel que l'alginate de sodium. La proportion de l'alginate de sodium sera, de préférence, de 0,8 % à 2 % environ du produit gélifiable fini. La durée de la dispersion varie suivant l'appareillage utilisé; elle peut être notamment d'environ 10 minutes.

On peut ainsi, à ce stade, ajouter des liants tels que de la carboxy-méthyl-cellulose et ses dérivés en proportion de 1 à 5 % environ du produit fini.

. Il est aussi possible d'introduire des solvants organiques miscibles à l'eau dans les solutions d'alginates, notamment des alcools tels que l'éthanol, le glycérol, le propylène glycol, etc...

4°) L'émulsification, pour introduire éventuellement les produits huileux ou solubles dans les huiles, tels que les lipides sous forme d'huiles végétales ou animales (arachide, colza, poisson, morue, etc...)

On peut introduire aussi des anti-oxydants solubles dans les huiles et certaines charges.

L'émulsification s'effectue avantageusement au moyen d'émulsifiants tels que des dérivés polyoxyéthylénés d'esters partiels d'acides gras et d'anhydrides d'hexitol (Tween 20 ®, Tween 40®), du monolaurate, monopalmitate ou mono-oléate de sorbitanne polyoxyéthyléné, etc...

Ces émulsifiants sont introduits, en général, en une quantité représentant de 0,2 à 1, 5 % du poids total du produit.

Les produits toxiques seront introduits à l'un quelconque des stades 1°) à 4°) précité suivant la nature du poison utilisé et sa solubilité ou non solubilité dans l'eau ou les huiles. A titre d'exemples de tels produits, on citera la chlorophacinone, le coumafène, le métaldéhyde, etc.. Tout toxique connu pour la destruction de l'animal considéré peut être utilisé.

Ce grand éventail de possibilités d'introduction du poison et des différents constituants du produit gélifiable constitue un des avantages majeurs de la présente invention.

Le produit étant à ce stade sous forme de pâte ou de gelée, le procédé de l'invention comprend alors sa mise dans la forme définitive désirée qui est fonction de l'utilisation envisagée. Cette forme sera, par exemple, une boulette, un filament, un vermisseau, un ver de terre, un granulé, une perle, une petite nouille, une coquillette, etc...

Cette mise en forme est réalisée de préférence au moyen d'une buse d'extrusion reliée à un récipient contenant le produit et à un dispositif de dosage intermédiaire envoyant à la buse la quantité appropriée du produit.

Suivant la forme de la buse, on peut obtenir des produits sphériques ou oblongs, des rubans de largeur variable, etc....

La forme et la dimension de l'extrémité de la buse d'extrusion conditionnent essentiellement la forme à donner à l'appât final.

Parmi les dispositifs de dosage utilisables, on citera à titre d'exemples les pompes péristaltiques, les remplisseuses volumétriques et les valves électropneumatiques.

Lorsque le produit est mis dans la forme finale voulue, le procédé comprend la fixation de ce produit dans cette forme par gélification ou prise en masse.

Cette gélification est réalisée par action sur le produit contenant le composant gélifiable d'un agent gélifiant. Le produit mis en forme peut être introduit dans l'agent gélifiant soit par chute libre dans une solution de ce dernier, soit par introduction directe du produit sortant de la buse dans un bain contenant l'agent gélifiant.

Si le composant gélifiable est un alginate, l'agent gélifiant sera notamment une solution aqueuse d'un sel métallique susceptible d'un échange d'ions avec le composant gélifiable.

A titre de sel métallique, on citera notamment des sels de calcium ou d'aluminium (en particulier les chlorures). Si le sel est du chlorure de calcium, il sera avantageusement sous la forme d'une solution aqueuse contenant de 5 à 100 g par litre du sel, une dose appropriée étant d'environ 30 g par litre si le composant gélifiable est l'alginate de sodium.

Lorsque le produit est ainsi gélifié et fixé dans sa forme d'utilisation finale, il est nécessaire d'assurer sa conservation jusqu'à l'utilisation. Dans ce but, le procédé de l'invention comprend la conservation du produit dans un milieu salin aqueux légèrement acide. Un tel milieu sera constitué notamment d'une solution aqueuse de sel marin, contenant un acide organique faible tel que l'acide citrique, lactique, etc.. en quantité suffisante pour assurer un pH légèrement acide de 6,5 à 7 environ. Cette solution contiendra avantageusement le même agent gélifiant que celui utilisé ci-dessus, notamment un sel de calcium ou d'aluminium, par exemple du chlorure de calcium. Dans la saumure, le chlorure de sodium sera notamment en une proportion de 2 à 40% en poids environ et le chlorure de calcium de 0,2 à 1% en poids.

On peut aussi conserver le produit sous vide ou sous gaz inerte tel qu'azote, argon, etc..

Les exemples non limitatifs suivants de produits suivant l'invention sont donnés à titre d'illustration de celle-ci.

**EXEMPLE 1 - Produit contre les rats musqués et ragondins sous**

forme de doses ayant la forme de fruits ou légumes artificiels entiers ou en morceaux.
Farine de céréales 5,000%
Farine animale 2,500 %
Luzerne déshydratée 20,000% > ile végétale 10,000%
Emulsifiant 0,400%
Carboxy-méthyl-cellulose 0,500 %
Alginate de sodium 2,000%
Benzoate de sodium 0,100%
Acide ascorbique 0,040%
Gallates 0,100%
Poudre de diatomées 2,000%
Chlorophacinone 0, 005%
Parfum attractif traces
Colorant traces Eau Q.S.P. 100%

**EXEMPLE 2 - Produit contre les taupes sous forme de**

vers de terre.
Chair de poisson 23,000%
Farine de sang 4,000% > ile animale 8,000%
Carboxy-méthyl-cellulose 1,000%
Alginate de sodium 1,500%
Emulsifiant 0,500%
Esters de l'acide benzoïque en solution phénolique 1,500%
Acide citrique 0,050%
Gallates 0,100%
Chlorure de sodium 1,000%

Charge inerte 1,750%
Coumafène 0,025%
Colorant traces
Parfum attractif traces
Eau Q.S.P. 100%

## EXEMPLE 3 - Produit contre les rongeurs sous forme de boulettes,

cubes, plaquettes, berlingots, petites saucisses ou petits boudins.

Mouture de céréales 30,000%
Farine de sang 3,000 % > ile 9,000%
Alginate de sodium 1,750%
Emulsifiant 0, 500%
Esters de l'acide parahydroxybenzoïque
(Méthyl sodé 0,600%
(Propyl sodé 0,300%
Acide citrique 0,040%
Gallates 0,100%
Coumafène 0,025%
Colorant traces
Parfum attractif anisé traces
Eau Q.S.P. 100%

## EXEMPLE 4 - Produit contre les mollusques nuisibles sous forme de

granulés, feuillets, nouillettes ou coquillettes.

Moutures de céréales 3,000%
Gluten 0,500%
Luzerne déshydratée 5,000%
Sels minéraux 1,000%
Carboxy-méthyl-cellulose 2,500%
Alginate de sodium 2,000%
Acide benzoïque 0,200%
Acide citrique 0,030%
Gallates 0,080%
Métaldéhyde 5,000%
Parfum fruits ou légumes traces
Colorant traces
Eau Q.S.P. 100.%

Par le procédé de l'invention, on peut fabriquer des produits parfaitement apporopriés à la destruction des rongeurs (rats d'eau, rats musqués, ragondins, etc...), des taupes, des mollusques nuisibles (escargots, arions, limaces, etc...), des oiseaux nuisibles, etc... .

## Revendications

1 - Procédé de fabrication de produits mis en forme et prêts à l'utilisation pour la destruction d'animaux nuisibles à partir d'une pâte aqueuse fluide contenant des éléments nutritifs, au moins un produit toxique vis-à-vis de l'animal à détruire, et un composant gélifiable, caractérisé en ce qu'on met la pâte sous la forme desirée pour le produit final, on gélifie ensuite la pâte ainsi mise en forme par mise en contact du produit mis en forme avec une solution aqueuse d'un sel métallique susceptible d'un échange d'ions avec le composant gélifiable et on conserve le produit gélifié pris en masse ainsi obtenu en milieu salin aqueux légèrement acide, ou sous vide ou sous gaz inerte.

2 - Procédé suivant la revendication 1, caractérisé en ce que le composant gélifiable est un alginate, notamment un alginate de métal alcalin.

3 - Procédé suivant la revendication 2, caractérisé en ce que l'alginate représente de 0,8 à 2 % environ en poids de la pâte.

4 - Procédé suivant l'une quelconque des revendications précédentes, caractérisé en ce qu'on effectue la mise en forme par passage de quantités dosées de la pâte à travers une buse de forme appropriée.

5 - Procédé suivant la revendication 1, caractérisé en ce que le composant gélifiable est un alginate et le sel métallique est un sel de calcium ou d'aluminium, notamment le chlorure.

6 - Procédé suivant la revendication 1 ou 5, caractérisé en ce que la solution aqueuse contient de 5 g à 100 g de chlorure de calcium par litre.

7 - Procédé suivant la revendication 1, caractérisé en ce que la conservation est effectuée dans une saumure aqueuse contenant de 2 % à 40 % en poids de chlorure de sodium, de 0,2 à 1 % en poids d'un sel métallique gélifiant et une quantité suffisante d'un acide faible pour que la saumure ait un pH compris entre 6,5 et 7.

8. Procédé suivant la revendication 1, caractérisé en ce que la préparation de la pâte aqueuse comprend au moins l'un des stades suivants: (a) mise en solution dans l'eau des composants solubles tels que des agents de conservation hydrosolubles, (b) mise en suspension d'éléments nutritifs tels que glucides et protides, (c) dispersion du composant gélifiable, additionné si on le désire d'un liant tel qu'une carboxyméthylcellulose et (d) introduction par émulsionnement d'éléments solubles dans l'huile, notamment de lipides, en présence d'agents émulsifiants, le produit toxique étant introduit à l'un des stades précités en fonction de sa nature et de sa solubilité dans l'eau ou les huiles.

## Patentansprüche

- 1. Verfahren zur Herstellung eines geformten und gebrauchsfertigen Produkts zur Bekämpfung schädlicher Tiere auf der Basis einer flüssigen wäßrigen Paste mit Nährstoffen, mindestens einem für das zu bekämpfende Tier toxischen Produkt und einer gelierbaren Komponente, gekennzeichnet durch
- Formen der Paste in die für das Endprodukt gewünschte Form,
- Gelieren der geformten Paste durch Kontaktieren mit einer wäßrigen Lösung eines Metallsalzes, das mit der gelierbaren Komponente Ionen austauschen kann, und
- Aufbewahren des so erhaltenen gelierten und verfestigten Produkts in einem schwach sauren, wäßrigen Salzmedium, im Vakuum oder unter Inertgasschutz.

2. Verfahren nach Anspruch 1,
gekennzeichnet durch
die Verwendung eines Alginats und insbesondere eines Alkalimetallalginats als gelierbare Komponente.

3. Verfahren nach Anspruch 2,
gekennzeichnet durch
die Verwendung des Alginats in einer Menge von etwa 0,8 bis 2 Gew.%, bezogen auf die Paste.

4. Verfahren nach einem der vorstehenden Ansprüche,
dadurch gekennzeichnet,
daß das Formen der Paste durch Durchleiten von abgepaßten Mengen der Paste durch eine Düse mit einer entsprechenden Form erfolgt.

5. Verfahren nach Anspruch 1,
gekennzeichnet durch
die Verwendung eines Alginats als gelierbare Komponente und eines Calcium- oder Aluminiumsalzes und insbesondere des Chlorids als Metallsalz.

6. Verfahren nach Anspruch 1 oder 5,
gekennzeichnet durch
die Verwendung einer wäßrigen Lösung mit 5 bis 100 g Calciumchlorid/Liter.

7. Verfahren nach Anspruch 1,
gekennzeichnet durch
die Aufbewahrung des Produkts in einer wäßrigen Salzlösung mit 2 bis 40 Gew.% Natriumchlorid, 0,2 bis 1 Gew.% gelierenden Metallsalz und einer für einen pH-Wert der Salzlösung von 6,5 bis 7 genügend großen Menge einer schwachen Säure.

3. Verfahren nach Anspruch 1,
gekennzeichnet durch
die Herstellung der wäßrigen Paste in mindestens einer der folgenden Stufen:
a) Lösen der löslichen Bestandteile, wie wasserlösliche Konservierungsmittel, in Wasser,
b) Suspendieren der Nährstoffe, wie Kohlenhydrate und Proteine,
c) Dispergieren der gelierbaren Komponente, gegebenenfalls Zugabe eines Bindemittels, wie Carboxymethylcellulose und
d) Einbringen durch Emulgieren von in Öl löslichen Bestandteilen, insbesondere von Lipiden, in Gegenwart von Emulgiermitteln, wobei das toxische Produkt in einer der vorgehenden Stufen je nach Art und Löslichkeit in Wasser oder Ölen eingeführt wird.

**Claims**

1. A method for manufacturing a product which is put into the required form and is ready for use for destroying harmful animals from a fluid aqueous paste containing nutritive elements, at least one product which is toxic for the animal to be destroyed, and a gelable constituent, characterized by the steps of: putting the paste into the desired form for the final product, gelling the paste thus put into the desired form by putting the product in contact with an aqueous solution of a metal salt capable of achieving an exchange of ions with the gelable constituent, and preserving the product gelled and set in the mass thus obtained in a slightly acid aqueous saline medium, or under a vacuum or an inert gas.

2. A method according to claim 1, wherein the gelable constituent is an alginate, namely an alkaline metal alginate.

3. A method according to claim 2, wherein the alginate represents about 0.8 to 2 % by weight of said paste.

4. A method according to any of the preceding claims, wherein the product is put into the desired form by passing metered amounts of said paste through a nozzle of suitable shape.

5. A method according to claim 1, wherein the gelable constituent is an alginate and the metal salt is a calcium or aluminiun salt, namely the chloride.

6. A method according to claim 1, wherein the aqueous solution contains 5 to 100 g of calcium chloride per liter.

7. A method according to claim 1, wherein the preservation is effected in an aqueous brine containing 2 to 40 % by weight of sodium chloride, 0.2 to 1 % by weight of a gelling metal salt and a sufficient amount of a weak acid so that the brine has a pH of between 6.5 and 7.

8. A method according to claim 1, wherein said fluid aqueous paste is prepared by at least one of the following steps: a) putting soluble constituents such as hydrosoluble preserving agents in solution in water, b) putting nutritive elements such as glucides and protides in suspension, c) dispersing the gelable constituent to which a binder such as a carboxy-methylcellulose is optionally added and d) introducing, by emulsioning, elements soluble in oil, in particular lipides, in the presence of emulsifying agents, the toxic product being introduced in one of the aforementioned steps in accordance with its type and its solubility in the water or the oils.